# EUROPEAN PATENT SPECIFICATION

(11) **EP 3 175 267 B1**
(45) Date of publication and mention of the grant of the patent: **30.12.2020**
(21) Application number: 14898685.4
(22) Date of filing: 30.07.2014
(51) Int. Cl.: F21V 8/00, G02B 6/00, G02F 1/13357, G02F 1/1335, G02B 5/18

(54) **MULTIBEAM DIFFRACTION GRATING-BASED COLOR BACKLIGHTING**
FARBIGE RÜCKBELEUCHTUNG AUF BASIS EINES MEHRSTRAHLDIFFRAKTIONSGITTERS
RÉTROÉCLAIRAGE COLORÉ À BASE DE RÉSEAU DE DIFFRACTION MULTIFAISCEAU

(43) Date of publication of application: 07.06.2017
(73) Proprietor: LEIA Inc., Menlo Park, CA 94025 (US)
(72) Inventor: FATTAL, David A., Menlo Park, CA 94025 (US)
(74) Representative: Carpmaels & Ransford LLP
(86) International application number: PCT/US2014/048923
(87) International publication number: WO 2016/018314

(56) References cited:
- US-A- 5 615 024
- US-A1- 2004 240 232
- US-A1- 2006 104 570
- US-A1- 2009 207 342
- US-A1- 2011 002 143
- US-A1- 2011 242 837
- US-A1- 2012 176 665

## Description

### CROSS-REFERENCE TO RELATED APPLICATIONS

N/A

### STATEMENT REGARDING FEDERALLY SPONSORED RESEARCH OR DEVELOPMENT

N/A

### BACKGROUND

US2004240232A1 describes a backlight for a liquid crystal display device having a light guide plate adapted to transmit light therethrough; a color dispersion sheet located at an opposite surface to the front surface of the light guide plate and adapted to refract the light transmitted through the light guide plate at different angles according to wavelength and to reflect the refracted light back into the light guide plate; and a diffraction pattern formed on at least one surface of the light guide plate adapted to allow the light proceeding at the different angles according to wavelength through the color dispersion sheet to exit at the same angle.

Electronic displays are a nearly ubiquitous medium for communicating information to users of a wide variety of devices and products. Among the most commonly found electronic displays are the cathode ray tube (CRT), plasma display panels (PDP), liquid crystal displays (LCD), electroluminescent displays (EL), organic light emitting diode (OLED) and active matrix OLEDs (AMOLED) displays, electrophoretic displays (EP) and various displays that employ electromechanical or electrofluidic light modulation (e.g., digital micromirror devices, electrowetting displays, etc.). In general, electronic displays may be categorized as either active displays (i.e., displays that emit light) or passive displays (i.e., displays that modulate light provided by another source). Among the most obvious examples of active displays are CRTs, PDPs and OLEDs/AMOLEDs. Displays that are typically classified as passive when considering emitted light are LCDs and EP displays. Passive displays, while often exhibiting attractive performance characteristics including, but not limited to, inherently low power consumption, may find somewhat limited use in many practical applications given the lack of an ability to emit light.

To overcome the applicability limitations of passive displays associated with light emission, many passive displays are coupled to an external light source. The coupled light source may allow these otherwise passive displays to emit light and function substantially as an active display. Examples of such coupled light sources are backlights. Backlights are light sources (often so-called 'panel' light sources) that are placed behind an otherwise passive display to illuminate the passive display. For example, a backlight may be coupled to an LCD or an EP display. The backlight emits light that passes through the LCD or the EP display. The light emitted by the backlight is modulated by the LCD or the EP display and the modulated light is then emitted, in turn, from the LCD or the EP display. Often backlights are configured to emit white light. Color filters are then used to transform the white light into various colors used in the display. The color filters may be placed at an output of the LCD or the EP display (less common) or between the backlight and the LCD or the EP display, for example.

### BRIEF DESCRIPTION OF THE DRAWINGS

Various features of examples in accordance with the principles described herein may be more readily understood with reference to the following detailed description taken in conjunction with the accompanying drawings, where like reference numerals designate like structural elements, and in which:
Figure 1 illustrates a graphical view of angular components {*θ*, *φ*} of a light beam having a particular principal angular direction, according to an example of the principles describe herein.
Figure 2A illustrates a cross sectional view of a multibeam diffraction grating-based color backlight, according to an example consistent with the principles described herein.
Figure 2B illustrates a perspective view of a surface of the multibeam diffraction grating-based color backlight illustrated in Figure 2A, according to an example consistent with the principles described herein.
Figure 2C illustrates a cross sectional view of a multibeam diffraction grating-based color backlight, according to another example consistent with the principles described herein.
Figure 3 illustrates a plan view of a multibeam diffraction grating, according to another example consistent with the principles described herein.
Figure 4A illustrates a cross sectional view of a multibeam diffraction grating-based color backlight including a tilted collimator, according to another example consistent with the principles described herein.
Figure 4B illustrates a schematic representation of a collimating reflector, according to an example consistent with the principles described herein.
Figure 5 illustrates a perspective view of the multibeam diffraction grating-based color backlight, according to an example consistent with the principles described herein.
Figure 6 illustrates a block diagram of an electronic display, according to an example consistent with the principles described herein.
Figure 7 illustrates a cross sectional view of a plurality of differently directed light beams that converge at a convergence point *P*, according to an example consistent with the principles described herein.
Figure 8 illustrates a flow chart of a method of color electronic display operation, according to an example consistent with the principles described herein.

Certain examples have other features that are one of in addition to and in lieu of the features illustrated in the above-referenced figures. These and other features are detailed below with reference to the above-referenced figures.

### DETAILED DESCRIPTION

Examples in accordance with the principles described herein provide electronic display backlighting using multibeam diffractive coupling of different colors of light. In particular, backlighting of an electronic display described herein employs a multibeam diffraction grating and a plurality of different colored light sources that are laterally displaced from one another. The multibeam diffraction grating is used to couple light of different colors produced by the light sources out of a light guide and to direct the coupled-out light of different colors in a viewing direction of the electronic display. The coupled-out light directed in the viewing direction by the multibeam diffraction grating includes a plurality of light beams that have different principal angular directions and different colors from one another, according to various examples of the principles described herein. In some examples, the light beams having the different principal angular directions (also referred to as 'the differently directed light beams') and the different colors may be employed to display three-dimensional (3-D) information. For example, the differently directed, different color light beams produced by the multibeam diffraction grating may be modulated and serve as pixels of a 'glasses free' 3-D electronic display.

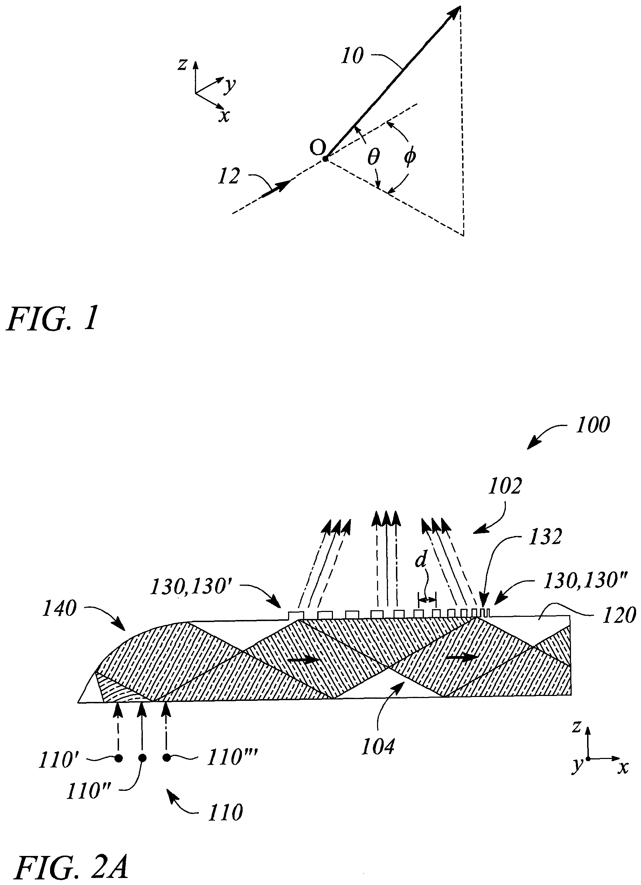

According to various examples, the multibeam diffraction grating produces the plurality of light beams having a corresponding plurality of different, spatially separated angles (i.e., different principal angular directions). In particular, a light beam produced by the multibeam diffraction grating has a principal angular direction given by angular components {*θ*, *φ*}, by definition herein. The angular component *θ* is referred to herein as the 'elevation component' or 'elevation angle' of the light beam. The angular component *φ* is referred to as the 'azimuth component' or 'azimuth angle' of the light beam, herein. By definition, the elevation angle *θ* is an angle in a vertical plane (e.g., perpendicular to a plane of the multibeam diffraction grating) while the azimuth angle *φ* is an angle in a horizontal plane (e.g., parallel to the multibeam diffraction grating plane). Figure 1 illustrates the angular components {*θ*, *φ*} of a light beam 10 having a particular principal angular direction, according to an example of the principles describe herein. In addition, the light beam is emitted or emanates from a particular point, by definition herein. That is, by definition, the light beam has a central ray associated with a particular point of origin within the multibeam diffraction grating. Figure 1 also illustrates the light beam point of origin *O*. An example propagation direction of incident light is illustrated in Figure 1 using a bold arrow 12.

According to various examples, characteristics of the multibeam diffraction grating and the features thereof (i.e., 'diffractive features') may be used to control one or both of the angular directionality of the light beams and a wavelength or color selectivity of the multibeam diffraction grating with respect to one or more of the light beams. The characteristics that may be used to control the angular directionality and wavelength selectivity include, but are not limited to, one or more of a grating length, a grating pitch (feature spacing), a shape of the features, a size of the features (e.g., groove or ridge width), and an orientation of the grating. In some examples, the various characteristics used for control may be characteristics that are local to a vicinity of the point of origin of a light beam.

Herein, a 'diffraction grating' is generally defined as a plurality of features (i.e., diffractive features) arranged to provide diffraction of light incident on the diffraction grating. In some examples, the plurality of features may be arranged in a periodic or quasi-periodic manner. For example, the diffraction grating may include a plurality of features (e.g., a plurality of grooves in a material surface) arranged in a one-dimensional (1-D) array. In other examples, the diffraction grating may be a two-dimensional (2-D) array of features. For example, the diffraction grating may be a 2-D array of bumps on a material surface.

As such, and by definition herein, the diffraction grating is a structure that provides diffraction of light incident on the diffraction grating. If the light is incident on the diffraction grating from a light guide, the provided diffraction may result in, and thus be referred to as, 'diffractive coupling' in that the diffraction grating may couple light out of the light guide by diffraction. The diffraction grating also redirects or changes an angle of the light by diffraction (i.e., a diffractive angle). In particular, as a result of diffraction, light leaving the diffraction grating (i.e., diffracted light) generally has a different propagation direction than a propagation direction of the incident light. The change in the propagation direction of the light by diffraction is referred to as 'diffractive redirection' herein. Hence, the diffraction grating may be understood to be a structure including diffractive features that diffractively redirects light incident on the diffraction grating and, if the light is incident from a light guide, the diffraction grating may also diffractively couple out the light from light guide.

Specifically herein, 'diffractive coupling' is defined as coupling of an electromagnetic wave (e.g., light) across a boundary between two materials as a result of diffraction (e.g., by a diffraction grating). For example, a diffraction grating may be used to couple out light propagating in a light guide by diffractive coupling across a boundary of the light guide. Similarly, 'diffractive redirection' is the redirection or change in propagation direction of light as a result of diffraction, by definition. Diffractive redirection may occur at the boundary between two materials if the diffraction occurs at that boundary (e.g., the diffraction grating is located at the boundary).

Further by definition herein, the features of a diffraction grating are referred to as 'diffractive features' and may be one or more of at, in and on a surface (e.g., a boundary between two materials). The surface may be a surface of a light guide, for example. The diffractive features may include any of a variety of structures that diffract light including, but not limited to, one or more of grooves, ridges, holes and bumps at, in or on the surface. For example, the multibeam diffraction grating may include a plurality of parallel grooves in the material surface. In another example, the diffraction grating may include a plurality of parallel ridges rising out of the material surface. The diffractive features (e.g., grooves, ridges, holes, bumps, etc.) may have any of a variety of cross sectional shapes or profiles that provide diffraction including, but not limited to, one or more of a rectangular profile, a triangular profile and a saw tooth profile.

By definition herein, a 'multibeam diffraction grating' is a diffraction grating that produces a plurality of light beams. In some examples, the multibeam diffraction grating may be or include a 'chirped' diffraction grating. The light beams of the plurality produced by the multibeam diffraction grating may have different principal angular directions denoted by the angular components {*θ*, *φ*}, as described above. In particular, according to various examples, each of the light beams may have a predetermined principal angular direction as a result of diffractive coupling and diffractive redirection of incident light by the multibeam diffraction grating. For example, the multibeam diffraction grating may produce eight light beams in eight different principal directions. According to various examples, the different principal angular directions of the various light beams are determined by a combination of a grating pitch or spacing and an orientation or rotation of the features of the multibeam diffraction grating at the points of origin of the light beams relative to a propagation direction of light incident on the multibeam diffraction grating.

Further herein, a 'light guide' is defined as a structure that guides light within the structure using total internal reflection. In particular, the light guide may include a core that is substantially transparent at an operational wavelength of the light guide. In some examples, the term 'light guide' generally refers to a dielectric optical waveguide that provides total internal reflection to guide light at an interface between a dielectric material of the light guide and a material or medium that surrounds that light guide. By definition, a condition for total internal reflection is that a refractive index of the light guide is greater than a refractive index of a surrounding medium adjacent to a surface of the light guide material. In some examples, the light guide may include a coating in addition to or instead of the aforementioned refractive index difference to further facilitate the total internal reflection. The coating may be a reflective coating, for example. According to various examples, the light guide may be any of several light guides including, but not limited to, one or both of a plate or slab guide and a strip guide.

Further herein, the term 'plate' when applied to a light guide as in a 'plate light guide' is defined as a piece-wise or differentially planar layer or sheet. In particular, a plate light guide is defined as a light guide configured to guide light in two substantially orthogonal directions bounded by a top surface and a bottom surface (i.e., opposite surfaces) of the light guide. Further, by definition herein, the top and bottom surfaces are both separated from one another and substantially parallel to one another in a differential sense. That is, within any differentially small region of the plate light guide, the top and bottom surfaces are substantially parallel or co-planar. In some examples, a plate light guide may be substantially flat (e.g., confined to a plane) and so the plate light guide is a planar light guide. In other examples, the plate light guide may be curved in one or two orthogonal dimensions. For example, the plate light guide may be curved in a single dimension to form a cylindrical shaped plate light guide. In various examples however, any curvature has a radius of curvature sufficiently large to insure that total internal reflection is maintained within the plate light guide to guide light.

Herein, a 'light source' is defined as a source of light (e.g., an apparatus or device that emits light). For example, the light source may be a light emitting diode (LED) that emits light when activated. Herein, a light source may be substantially any source of light or optical emitter including, but not limited to, one or more of a light emitting diode (LED), a laser, an organic light emitting diode (OLED), a polymer light emitting diode, a plasma-based optical emitter, a fluorescent lamp, an incandescent lamp, and virtually any other source of light. The light produced by a light source may have a color or may include a particular wavelength of light. As such, a 'plurality of light sources of different colors' is explicitly defined herein as a set or group of light sources in which at least a one of the light sources produces light having a color or equivalently a wavelength that differs from a color or wavelength of light produced by at least one other light source of the light source plurality. Moreover, the 'plurality of light sources of different colors' may include more than one light source of the same or substantially similar color as long as at least two light sources of the plurality of light sources are different color light sources (i.e., produce a color of light that is different between the at least two light sources). Hence, by definition herein, a plurality of light sources of different colors may include a first light source that produces a first color of light and a second light source that produces a second color of light, where the second color differs from the first color.

Further, as used herein, the article 'a' is intended to have its ordinary meaning in the patent arts, namely 'one or more'. For example, 'a grating' means one or more gratings and as such, 'the grating' means 'the grating(s)' herein. Also, any reference herein to 'top', 'bottom', 'upper', 'lower', 'up', 'down', 'front', back', 'first', 'second', 'left' or 'right' is not intended to be a limitation herein. Herein, the term 'about' when applied to a value generally means within the tolerance range of the equipment used to produce the value, or in some examples, means plus or minus 10%, or plus or minus 5%, or plus or minus 1%, unless otherwise expressly specified. Further, the term 'substantially' as used herein means a majority, or almost all, or all, or an amount within a range of about 51% to about 100%, for example. Moreover, examples herein are intended to be illustrative only and are presented for discussion purposes and not by way of limitation.

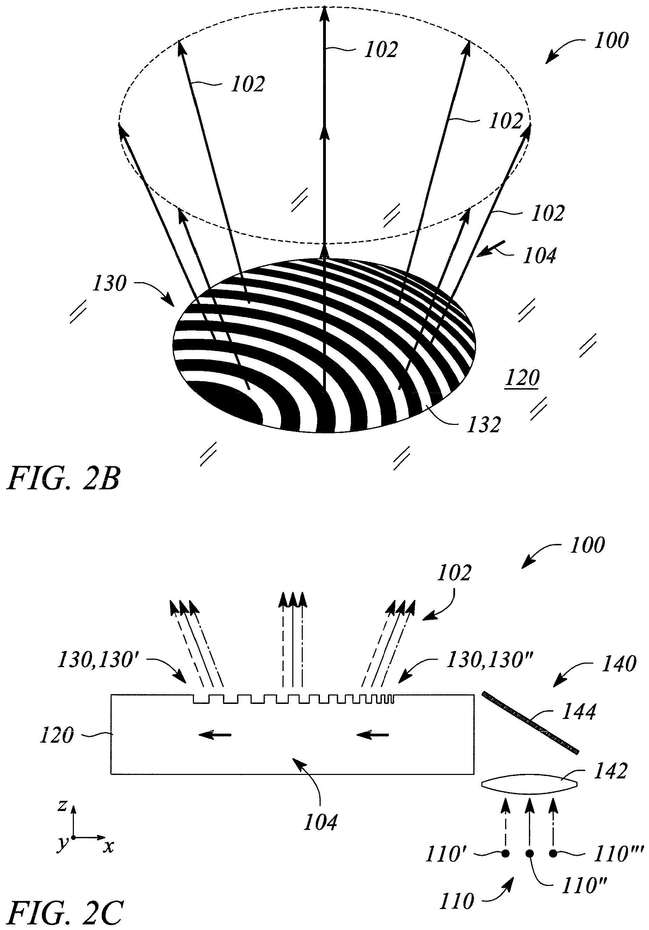

Figure 2A illustrates a cross sectional view of a multibeam diffraction grating-based color backlight 100, according to an example consistent with the principles described herein. Figure 2B illustrates a perspective view of a surface of the multibeam diffraction grating-based color backlight 100 illustrated in Figure 2A, according to an example consistent with the principles described herein. Figure 2C illustrates a cross sectional view of a multibeam diffraction grating-based color backlight 100, according to another example consistent with the principles described herein.

According to various examples, the multibeam diffraction grating-based color backlight 100 is configured to provide a plurality of light beams 102 directed out and away from the multibeam diffraction grating-based color backlight 100 in different predetermined directions. Further, various light beams 102 of the light beam plurality represent or include different colors of light. In some examples, the plurality of light beams 102 of different colors and different directions forms a plurality of pixels of an electronic display. In some examples, the electronic display is a so-called 'glasses free' three-dimensional (3-D) display (e.g., a multiview display).

In particular, a light beam 102 of the light beam plurality provided by the multibeam diffraction grating-based color backlight 100 is configured to have a different principal angular direction from other light beams 102 of the light beam plurality (e.g., see Figures 2A-2C), according to various examples. Further, the light beam 102 may have a relatively narrow angular spread. As such, the light beam 102 may be directed away from the multibeam diffraction grating-based color backlight 100 in a direction established by the principal angular direction of the light beam 102.

In addition, light beams 102 of the light beam plurality provided by the multibeam diffraction grating-based color backlight 100 have or represent different colors of light. In some examples, the different colors of the light beams 102 may represent colors in a set of colors (e.g., a color palette). Further, according to some examples, light beams 102 representing each of the colors in the set of colors may have substantially equal principal angular directions. In particular, for a particular principal angular direction, there may be a set of light beams 102 representing each of the colors in the set of colors. In some examples, each principal angular direction of the plurality of light beams 102 may include a set of light beams 102 representing each the colors of the set of colors. In some examples, the light beams 102 of different colors (e.g., of the set of colors) and different principal angular directions may be modulated (e.g., by a light valve as described below). The modulation of the different color light beams 102 directed in different directions away from the multibeam diffraction grating-based color backlight 100 may be particularly useful as pixels in color 3-D electronic display applications.

The multibeam diffraction grating-based color backlight 100 includes a plurality of light sources 110 of different colors. In particular, a light source 110 of the light source plurality is configured to produce light of a color (i.e., an optical wavelength) that differs from a color of light produced by other light sources 110 of the light source plurality, by definition herein. For example, a first light source 110' of the light source plurality may produce light of a first color (e.g., red), a second light source 110" of the light source plurality may produce light of a second color (e.g., green), a third light source 110'" of the light source plurality may produce light of a third color (e.g., blue), and so on.

In various examples, the plurality of light sources 110 of different colors may include light sources 110 that represent substantially any source of light including, but not limited to, one or more of a light emitting diode (LED), a fluorescent light, and a laser. For example, the plurality of light sources 110 may each include a plurality of LEDs. In some examples, one or more of the light sources 110 of the light source plurality may produce a substantially monochromatic light having a narrowband spectrum denoted by a specific color. In particular, the color of the monochromatic light may be a primary color of a predetermined color gamut or color model (e.g., a red-green-blue (RGB) color model), according to some examples. For example, the first light source 110' of the light source plurality may be a red LED and the monochromatic light produced by the first light source 110' may be substantially the color red. In this example, the second light source 110" may be a green LED and the monochromatic light produced by the second light source 110" may be substantially green in color. Further, the third light source 110'" may be a blue LED and the monochromatic light produced by the third light source 110"' may be substantially blue in color, in this example.

In other examples, the light provided by one or more of the light sources 110 of the plurality may have a relatively broadband spectrum (i.e., may not be monochromatic light). For example, a fluorescent light source or similar broadband light source that produces substantially white light may be employed as part of the light source plurality. In some examples when a broadband light source is used, the white light produced by the broadband light source may be 'converted' into a respective color (e.g., red, green, blue, etc.) of the different colors of the light source plurality using a color filter or a similar mechanism (e.g., a prism). The broadband light source combined with the color filter effectively produces light of a respective color of the color filter, for example. In particular, the respective color may be a color of the different colors of the plurality of light sources 110 and the 'converted' broadband light source that includes the color filter may be a light source 110 of the plurality of light sources 110 of different colors, according to various examples. Note that the colors red, green and blue are employed herein by way of discussion and not limitation. Other colors instead of or in addition to any or all of red, green and blue may be used as the different colors of the light sources 110, for example.

According to various examples, the light sources 110 of the light source plurality are laterally displaced from one another, as illustrated in Figures 2A and 2C. For example, the light sources 110 may be laterally displaced from one another along a particular axis or direction. In particular, as illustrated in Figures 2A and 2C, the first light source 110' is laterally displaced to the left along an x-axis relative to the second light source 110". Further, the third light source 110'" is laterally displaced to the right along the x-axis relative to the second light source 110", as illustrated.

According to the invention, the multibeam diffraction grating-based color backlight 100 further includes a plate light guide 120 configured to guide light 104 that enters the plate light guide 120. The plate light guide 120 is configured to guide the light 104 of the different colors produced by the light sources 110 of the light source plurality, according to various examples. In some examples, the light guide 120 guides the light 104 using total internal reflection. For example, the plate light guide 120 may include a dielectric material configured as an optical waveguide. The dielectric material may have a first refractive index that is greater than a second refractive index of a medium surrounding the dielectric optical waveguide. The difference in refractive indices is configured to facilitate total internal reflection of the guided light 104 according to one or more guided modes of the plate light guide 120, for example.

In some examples, the plate light guide 120 may be a slab or plate optical waveguide that is an extended, substantially planar sheet of optically transparent material (e.g., as illustrated in cross section in Figures 2A and 2C). The substantially planar sheet of dielectric material is configured to guide the light 104 through total internal reflection. In some examples, the plate light guide 120 may include a cladding layer on at least a portion of a surface of the plate light guide 120 (not illustrated). The cladding layer may be used to further facilitate total internal reflection, for example. According to various examples, the optically transparent material of the plate light guide 120 may include or be made up of any of a variety of dielectric materials including, but not limited to, one or more of various types of glass (e.g., silica glass, alkali-aluminosilicate glass, borosilicate glass, etc.) and substantially optically transparent plastics or polymers (e.g., poly(methyl methacrylate) or 'acrylic glass', polycarbonate, etc.).

According to various examples, the light produced by the light sources 110 is coupled into an end of the plate light guide 120 to propagate and be guided along a length or propagation axis of the plate light guide 120. For example, as illustrated in Figures 2A and 2C, the guided light 104 may propagate along the propagation axis of the plate light guide 120 in a generally horizontal direction (i.e., along the x-axis). Propagation of the guided light 104 in a general propagation direction along the propagation axis is illustrated from left to right in Figure 2A as several bold horizontal arrows (i.e., pointing from left to right). Figure 2C illustrates propagation of the guided light 104 from right to left, also as several bold horizontal arrows. The propagation of the guided light 104 illustrated by the bold horizontal arrows along the x-axis in Figures 2A and 2C represents various propagating optical beams within the plate light guide 120. In particular, the propagating optical beams may represent plane waves of propagating light associated with one or more of the optical modes of the plate light guide 120, for example. The propagating optical beams of the guided light 104 may propagate along the propagation axis by 'bouncing' or reflecting off walls of the plate light guide 120 at an interface between the material (e.g., dielectric) of the plate light guide 120 and the surrounding medium due to total internal reflection, according to various examples.

According to the invention, lateral displacement of the light sources 110 of the light source plurality determines a relative angle of propagation of the various propagating optical beams of the guided light 104 within the plate light guide 120 (i.e., in addition to propagation along the propagation axis). In particular, lateral displacement of the first light source 110' relative to the second light source 110" (e.g., to the left in Figure 2A and to the right in Figure 2C), may result in a propagating optical beam associated with the first light source 110' having a propagation angle within the plate light guide 120 that is smaller or 'shallower' that a propagation angle of a propagating optical beam associated with the second light source 110". Likewise, the lateral displacement of the third light source 110'" relative to the second light source 110", (e.g., to the right in Figure 2A and to the left in Figure 2C) may result in a larger or 'steeper' propagation angle of the propagating optical beam associated with the third light source 110'" relative to the propagation angle of the propagating optical beam of the second light source 110". Hence a relative lateral displacement of the light sources 110 of the light source plurality is used to control or determine the propagation angle of the propagating optical beam associated with each of the light sources 110.

In Figures 2A and 2C, the light of a color associated with the second light source 110" is illustrated with a solid line, while light of colors associated with the first and third light sources 110', 110"' are illustrated respectively with different dashed lines. As illustrated by the respective solid and the different dashed lines in Figures 2A and 2C, light of different colors is emitted by the first, second and third light sources 110', 110", 110"'. The light of the different colors is coupled into the plate light guide 120 and propagates along the plate light guide propagation axis as the guided light 104 (e.g., as illustrated by the bold horizontal arrows). In addition, each of the different colors of the guided light 104 coupled into the plate light guide 120 propagates along the propagation axis with a different propagation angle determined by the lateral displacement of respective ones of the first, second and third light sources 110', 110", 110"'. Propagation of the guided light 104 with the various different propagation angles is illustrated as a zigzag, crosshatched region in Figure 2A. Further, in Figures 2A and 2C, light beams 102 of the different colors of light associated with the first, second and third light sources 110', 110", 110"' are depicted using corresponding solid and variously dashed lines.

According to the invention, the multibeam diffraction grating-based color backlight 100 further includes a multibeam diffraction grating 130. The multibeam diffraction grating 130 is located at a surface of the plate light guide 120 and is configured to diffractively couple out a portion or portions of the guided light 104 from the plate light guide 120 by or using diffractive coupling. In particular, the coupled-out portion of the guided light 104 is diffractively redirected away from the light guide surface as the plurality of light beams 102 of different colors (i.e., representing the different colors of the light sources 110). Further, light beams 102 of different colors are redirected away from the light guide surface in different principal angular directions by the multibeam diffraction grating 130. As such, the light beams 102 representing guided light 104 from the second light source 110" (solid line arrow) have different principal angular directions when diffractively coupled out, as illustrated. Similarly, the light beams 102 representing guided light 104 from each of the light source 110' and the light source 110'" (various dashed line arrows) respectively also have different principal angular directions. However, some of the light beams 102 from each of the laterally displaced light sources 110', 110", 110'" may have substantially similar principal angular directions, according to various examples.

In general, the light beams 102 produced by the multibeam diffraction grating 130 may be either diverging or converging, according to various examples. In particular, Figure 2A illustrates the plurality of light beams 102 that are converging, while Figure 2C illustrates the light beams 102 of the plurality that are converging. Whether the light beams 102 are diverging (Figure 2A) or diverging (Figure 2C) is determined by a propagation direction of the guided light 104 relative to a characteristic of the multibeam diffraction grating 130 (e.g., a chirp direction), according to various examples. In some examples where the light beams 102 are diverging, the diverging light beams 102 may appear to be diverging from a 'virtual' point (not illustrated) located some distance below or behind the multibeam diffraction grating 130. Similarly, the converging light beams 102 may converge or cross at a virtual point (not illustrated) above or in front of the multibeam diffraction grating 130, according to some examples.

According to various examples, the multibeam diffraction grating 130 includes a plurality of diffractive features 132 that provide diffraction. The provided diffraction is responsible for the diffractive coupling of the guided light 104 out of the plate light guide 120. For example, the multibeam diffraction grating 130 may include one or both of grooves in a surface of the plate light guide 120 and ridges protruding from the light guide surface 120 that serve as the diffractive features 132. The grooves and ridges may be arranged parallel to one another and, at least at some point, perpendicular to a propagation direction of the guided light 104 that is to be coupled out by the multibeam diffraction grating 130.

In some examples, the grooves and ridges may be etched, milled or molded into the surface or applied on the surface. As such, a material of the multibeam diffraction grating 130 may include a material of the plate light guide 120. As illustrated in Figure 2A, for example, the multibeam diffraction grating 130 includes substantially parallel ridges that protrude from the surface of the plate light guide 120. In Figure 2C, the multibeam diffraction grating 130 includes substantially parallel grooves that penetrate the surface of the plate light guide 120. In other examples (not illustrated), the multibeam diffraction grating 130 may be a film or layer applied or affixed to the light guide surface. The diffraction grating 130 may be deposited on the light guide surface, for example.

The multibeam diffraction grating 130 may be arranged in a variety of configurations at, on or in the surface of the plate light guide 120, according to various examples. For example, the multibeam diffraction grating 130 may be a member of a plurality of gratings (e.g., multibeam diffraction gratings) arranged in columns and rows across the light guide surface. The rows and columns of multibeam diffraction gratings 130 may represent a rectangular array of multibeam diffraction gratings 130, for example. In another example, the plurality of multibeam diffraction gratings 130 may be arranged as another array including, but not limited to, a circular array. In yet another example, the plurality of multibeam diffraction gratings 130 may be distributed substantially randomly across the surface of the plate light guide 120.

According to some examples, the multibeam diffraction grating 130 may include a chirped diffraction grating 130. By definition, the chirped diffraction grating 130 is a diffraction grating exhibiting or having a diffraction pitch or spacing d of the diffractive features that varies across an extent or length of the chirped diffraction grating 130, as illustrated in Figures 2A-2C. Herein, the varying diffraction spacing d is referred to as a 'chirp'. As a result, the guided light 104 that is diffractively coupled out of the plate light guide 120 exits or is emitted from the chirped diffraction grating 130 as the light beam 102 at different diffraction angles corresponding to different points of origin across the chirped diffraction grating 130. By virtue of the chirp, the chirped diffraction grating 130 may produce the plurality of light beams 102 having different principal angular directions.

Further, the diffraction angle that establishes the principal angular direction of the light beams 102 is also a function of a wavelength or color and an angle of incidence of the guided light 104. As such, a principal angular direction of a light beam 102 of a color corresponding to a respective light source 110 is a function of the lateral displacement of the respective light source 110, according to various examples. In particular, as is discussed above, the various light sources 110 of the light source plurality are configured to produce light of different colors. Further, the light sources 110 are laterally displaced from one another to produced different propagation angles of the guided light 104 within the plate light guide 120. A combination of the different propagation angles (i.e., angles of incidence) of the guided light 104 due to respective lateral displacements of the light sources 110 and the different colors of the guided light 104 produced by the light sources 110 results in a plurality of different color light beams 102 having substantially equal principal angular directions, according to various examples. For example, the light beams 102 of different colors (i.e., sets of different colored light beams) having substantially equal principal angular directions are illustrated in Figures 2A-2C using a combination of solid and dashed lines.

In some examples, the chirped diffraction grating 130 may have or exhibit a chirp of the diffractive spacing d that varies linearly with distance. As such, the chirped diffraction grating 130 may be referred to as a 'linearly chirped' diffraction grating. Figures 2A and 2C illustrate the multibeam diffraction grating 130 as a linearly chirped diffraction grating, for example. As illustrated, the diffractive features 132 are closer together at a second end 130" of the multibeam diffraction grating 130 than at a first end 130'. Further, the diffractive spacing *d* of the illustrated diffractive features 132 varies linearly from the first end 130' to the second end 130".

In some examples, the light beams 102 of different colors produced by coupling guided light 104 out of the plate light guide 120 using the multibeam diffraction grating 130 including the chirped diffraction grating may converge (i.e., be diverging light beams 102) when the guided light 104 propagates in a direction from the first end 130' to the second end 130" (e.g., as illustrated in Figure 2A). Alternatively, diverging light beams 102 of different colors may be produced when the guided light 104 propagates from the second end 130" to the first end 130' (e.g., as illustrated in Figure 2C), according to other examples.

In another example (not illustrated), the chirped diffraction grating 130 may exhibit a non-linear chirp of the diffractive spacing *d*. Various non-linear chirps that may be used to realize the chirped diffraction grating 130 include, but are not limited to, an exponential chirp, a logarithmic chirp or a chirp that varies in another, substantially non-uniform or random but still monotonic manner. Non-monotonic chirps such as, but not limited to, a sinusoidal chirp or a triangle (or sawtooth) chirp, may also be employed.

According to some examples, the diffractive features 132 within the multibeam diffraction grating 130 may have varying orientations relative to an incident direction of the guided light 104. In particular, an orientation of the diffractive features 132 at a first point within the multibeam diffraction grating 130 may differ from an orientation of the diffractive features 132 at another point. As described above, angular components of the principal angular direction {*θ*, *φ*} of the light beam 102 are determined by or correspond to a combination of a local pitch (i.e., diffractive spacing *d*) and an azimuthal orientation angle of the diffractive features 132 at a point of origin of the light beam 102, according to some examples. Further, the azimuthal component *φ* of the principal angular direction {*θ*, *φ*} of the light beam 102 may be substantially independent of a color of the light beam 102 (i.e., substantially equal for all colors), according to some examples. In particular, a relationship between the azimuthal component *φ* and the azimuthal orientation angle of the diffractive features 132 may be substantially the same for all colors of the light beams 120, according to some examples. As such, the varying an orientation of the diffractive features 132 within the multibeam diffraction grating 130 may produce different light beams 102 having different principal angular directions {*θ*, *φ*} regardless of a color of the light beam 102, at least in terms of their respective azimuthal components *φ*.

In some examples, the multibeam diffraction grating 130 may include diffractive features 132 that are either curved or arranged in a generally curved configuration. For example, the diffractive features 132 may include one of curved grooves and curved ridges that are spaced apart from one another along radius of the curve. Figure 2B illustrates curved diffractive features 132 as curved, spaced apart ridges, for example. At different points along the curve of the diffractive features 132, an 'underlying diffraction grating' of the multibeam diffraction grating 130 associated with the curved diffractive features 132 has a different azimuthal orientation angle. In particular, at a given point along the curved diffractive features 132 the curve has a particular azimuthal orientation angle that generally differs from another point along the curved diffractive feature 132. Further, the particular azimuthal orientation angle results in a corresponding principal angular direction {*θ*, *φ*} of a light beam 102 emitted from the given point. In some examples, the curve of the diffractive feature(s) (e.g., groove, ridge, etc.) may represent a section of a circle. The circle may be coplanar with the light guide surface. In other examples, the curve may represent a section of an ellipse or another curved shape, e.g., that is coplanar with the light guide surface.

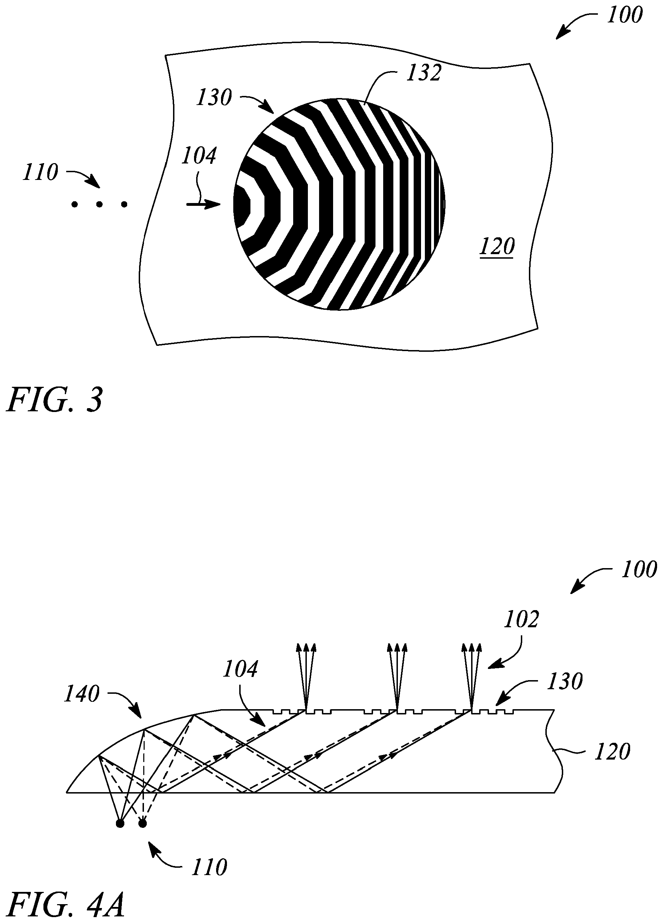

In other examples, the multibeam diffraction grating 130 may include diffractive features 132 that are 'piece-wise' curved. In particular, while the diffractive feature may not describe a substantially smooth or continuous curve *per se,* at different points along the diffractive feature within the multibeam diffraction grating 130, the diffractive feature 132 still may be oriented at different angles with respect to the incident direction of the guided light 104 to approximate a curve. For example, the diffractive feature 132 may be a groove including a plurality of substantially straight segments, each segment of the groove having a different orientation than an adjacent segment. Together, the different angles of the segments may approximate a curve (e.g., a segment of a circle). For example, Figure 3, which is described below, illustrates an example of piece-wise curved diffractive features 132. In yet other examples, the features 132 may merely have different orientations relative to the incident direction of the guided light at different locations within the multibeam diffraction grating 130 without approximating a particular curve (e.g., a circle or an ellipse).

In some examples, the multibeam diffraction grating 130 may include both differently oriented diffractive features 132 and a chirp of the diffractive spacing d. In particular, both the orientation and the spacing d between the diffractive features 132 may vary at different points within the multibeam diffraction grating 130. For example, the multibeam diffraction grating 130 may include a curved and chirped diffraction grating 130 having grooves or ridges that are both curved and vary in spacing d as a function of a radius of the curve.

Figure 2B illustrates the multibeam diffraction grating 130 including diffractive features 132 (e.g., grooves or ridges) that are both curved and chirped (i.e., is a curved, chirped diffraction grating) in or on a surface of the plate light guide 120. The guided light 104 has an incident direction relative to the multibeam diffraction grating 130 and the plate light guide 120 as illustrated in Figure 2B, by way of example. Figure 2B also illustrates the plurality of emitted light beams 102 pointing away from the multibeam diffraction grating 130 at the surface of the plate light guide 120. As illustrated, the light beams 102 are emitted in a plurality of different principal angular directions. In particular, the different principal angular directions of the emitted light beams 102 are different in both azimuth and elevation, as illustrated. As discussed above, both the chirp of the diffractive features 132 and the curve of the diffractive features 132 may be substantially responsible for the different principle angular directions of the emitted light beams 102.

Figure 3 illustrates a plan view of a multibeam diffraction grating 130, according to another example consistent with the principles described herein. As illustrated, the multibeam diffraction grating 130 is on a surface of a plate light guide 120 of a multibeam diffraction grating-based color backlight 100 that also includes a plurality of light sources 110. The multibeam diffraction grating 130 includes diffractive features 132 that are both piece-wise curved and chirped. A bold arrow in Figure 3 illustrates an example incident direction of the guided light 104.

According to the invention the multibeam diffraction grating-based color backlight 100 further includes a tilted collimator. The tilted collimator is located between the plurality of light sources 110 and the plate light guide 120. The tilted collimator is configured to tilt light from the light sources 110 and to direct the tilted and collimated light into to the plate light guide 120 as the guided light 104. According to various examples, the tilted collimator may include, but is not limited to a collimating lens in combination with a mirror, a tilted collimating lens or collimating reflector. For example, Figure 2A illustrates a tilted collimator 140 including a collimating reflector configured to collimate and tilt the light from the light sources 110. Figure 2C illustrates a tilted collimator 140 that includes a collimating lens 142 and a mirror 144, by way of example and not limitation.

Figure 4A illustrates a cross sectional view of a multibeam diffraction grating-based color backlight 100 including a tilted collimator 140, according to another example consistent with the principles described herein. In particular, the tilted collimator 140 is illustrated as a collimating reflector 140 located between the plurality of light sources 110 of different colors and the plate light guide 120. In Figure 4A, the light sources 110 are laterally displaced from one another in a direction corresponding to a propagation axis of the guided light 104 within the plate light guide 120 (e.g., the x-axis), as illustrated. Further, as illustrated, the multibeam diffraction grating-based color backlight 100 includes a plurality of multibeam diffraction gratings 130 (i.e., a multibeam diffraction grating array) at a surface of the plate light guide 120. Each multibeam diffraction grating 130 is configured to produce a plurality of light beams 102 of different colors and different principal angular directions.

According to various examples, the collimating reflector 140 illustrated in Figure 4A is configured to collimate light of different colors produced by the light sources 110. The collimating reflector 140 is further configured to direct the collimated light at a tilt angle relative to a top surface and a bottom surface of the plate light guide 120. According to some examples, the tilt angle is both greater than zero and less than a critical angle of total internal reflection within the plate light guide 120. According to various examples, light from a respective light source 110 of the light source plurality may have a corresponding tilt angle determined by both a tilt of the collimating reflector and a lateral displacement of the respective light source 110 relative to a focus or focal point F of the collimating reflector 140.

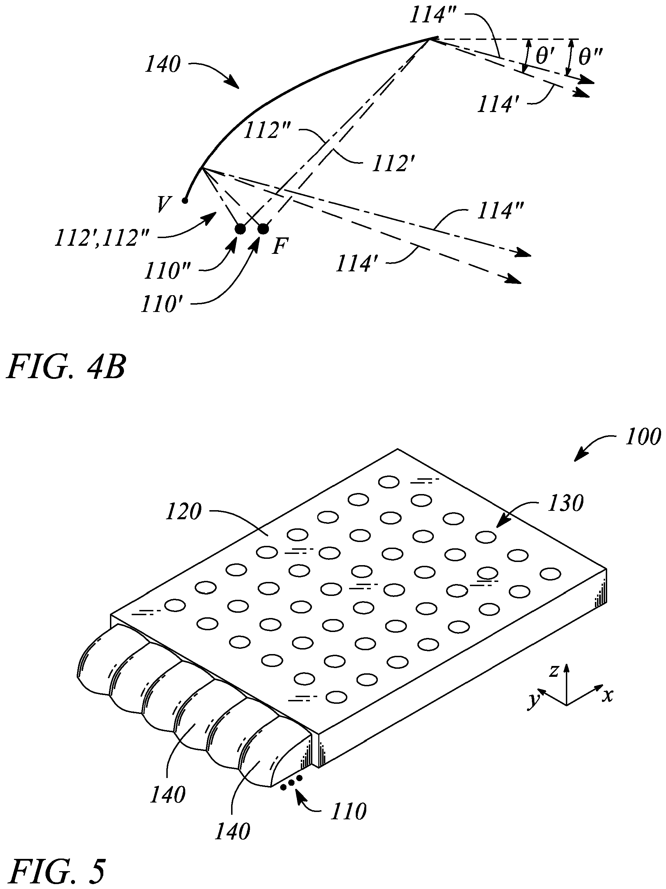

Figure 4B illustrates a schematic representation of a collimating reflector 140, according to an example consistent with the principles described herein. In particular, Figure 4B illustrates a first light source 110' (e.g., a green light source) located at the focal point *F* of the collimating reflector 140. Also illustrated is a second light source 110" (e.g., a red light source) laterally displaced from the first light source 110' along the x-axis, i.e., in a direction corresponding to the propagation axis. Light (e.g., green light) produced by the first light source 110' diverges as a cone of light denoted by rays 112' in Figure 4B. Similarly, light (e.g., red light) produced by the second light source 110" diverges as a cone of light denoted by rays 112" in Figure 4B.

Collimated light from the first light source 110' exiting the collimating reflector 140 is denoted by parallel rays 114', while collimated light from the second light source 110" exiting the collimating reflector 140 is denoted by parallel rays 114", as illustrated. Note that the collimated reflector 140 not only collimates the light but also directs or tilts the collimated light downward a non-zero angle. In particular, the collimated light from the first light source 110' is tilted downward at a tilt angle *θ*' and the collimated light from the second light source 110" is tilted downward at a different tilt angle *θ*", as illustrated. The difference between the first light source tilt angle *θ*' and the second light source tilt angle *θ*" is provided or determined by the lateral displacement of the second light source 110" relative to the first light source 110', according to various examples. Note that the different tilt angles *θ*', *θ*" correspond to different propagation angles of the guided light 104 within the light guide 120 for the light (e.g., green vs. red) from respective ones of the first and second light sources 110', 110", as illustrated in Figure 4A.

In some examples, the tilted collimator (e.g., the collimating reflector 140) is integral to plate light guide 120. In particular, the integral tilted collimator 140 may not be substantially separable from the plate light guide 120, for example. For example, the tilted collimator 140 may be formed from a material of the plate light guide 120, e.g., as illustrated in Figure 4A with the collimating reflector 140. Both of the integral collimating reflector 140 and the plate light guide 120 of Figure 4A may be formed by injection molding a material that is continuous between the collimating reflector 140 and the plate light guide 120. The material of both of the collimating reflector 140 and the plate light guide 120 may be injection-molded acrylic, for example. In other examples, the tilted collimator 140 may be a substantially separate element that is aligned with and, in some instances, attached to the plate light guide 120 to facilitate coupling of light into the plate light guide 120.

According to some examples, the tilted collimator 140 when implemented as the collimating reflector 140 may further include a reflective coating on a curved surface (e.g., a parabolic shaped surface) of a material used to form the collimating reflector 140. A metallic coating (e.g., an aluminum film) or a similar 'mirroring' material may be applied to an outside surface of a curved portion of the material that forms the collimating reflector 140 to enhance a reflectivity of the surface, for example. In examples of the multibeam diffraction grating-based color backlight 100 that include the tilted collimator 140 integral to the plate light guide 120, the multibeam diffraction grating-based color backlight 100 may be referred to herein as being 'monolithic.'

In some examples, the collimating reflector 140 of the tilted collimator 140 includes a portion of a doubly curved paraboloid reflector. The doubly curved paraboloid reflector may have a first parabolic shape to collimate light in a first direction parallel to a surface of the plate light guide 120. In addition, the doubly curved paraboloid reflector may have a second parabolic shape to collimate light in a second direction substantially orthogonal to the first direction.

In some examples, the tilted collimator 140 includes a collimating reflector 140 that is a 'shaped 'reflector. The shaped reflector in conjunction with the laterally displaced light sources 110 is configured to produce a first light beam 102 corresponding to a first color of the different colors of light and to produce a second light beam 102 corresponding to a second color of the different colors, as emitted from the multibeam diffraction grating 130. According to various examples, a principal angular direction of the first light beam 102 is about equal to a principal angular direction of the second light beam. In particular, to achieve an about equal principal angular direction for the first and second light beams 102, a method such as, but not limited to, ray-tracing optimization may be employed. Ray-tracing optimization may be used to adjust a shape of an initially parabolic reflector to yield the shaped reflector, for example. The ray-tracing optimization may provide a reflector shape adjustment that satisfies a constraint that both the first light beam 102 of a first color and a second light beam 102 of a second color have equal principal angular directions, for example, when the first and second light beams 102 exit the multibeam diffraction grating 130.

Figure 5 illustrates a perspective view of the multibeam diffraction grating-based color backlight 100, according to an example consistent with the principles described herein. In particular, as illustrated in Figure 5, the multibeam diffraction grating-based color backlight 100 is monolithic, having a plurality of integral collimating reflectors 140 at an edge of the plate light guide 120. Further, as illustrated, each of the collimating reflectors 140 has a doubly curved parabolic shape to collimate light in both a horizontal direction (i.e., a y-axis) and a vertical direction (i.e., a z-axis). Moreover, the multibeam diffraction gratings 130 are illustrated as circular features on the plate light guide surface in Figure 5, by way of example. A plurality of laterally displaced light sources 110 of different colors are depicted below a first one of the collimating reflectors 140, as further illustrated in Figure 5. Although not explicitly illustrated, a separated plurality of laterally displaced light sources of different colors are below each of the other collimating reflectors 140 so that each collimating reflector 140 has its own set of light sources 110, according to various examples.

In some examples, the multibeam diffraction grating-based color backlight 100 is substantially optically transparent. In particular, both of the plate light guide 120 and the multibeam diffraction grating 130 may be optically transparent in a direction orthogonal to a direction of guided light propagation in the plate light guide 120, according to some examples. Optical transparency may allow objects on one side of the multibeam diffraction grating-based color backlight 100 to be seen from an opposite side, for example (i.e., seen through a thickness of the plate light guide 120). In other examples, the multibeam diffraction grating-based color backlight 100 is substantially opaque when viewed from a viewing direction (e.g., above a top surface).

According to some examples of the principles described herein, a color electronic display is provided. The color electronic display is configured to emit modulated light beams of different colors as pixels of the electronic display. Further, in various examples, the modulated, different colored, light beams may be preferentially directed toward a viewing direction of the color electronic display as a plurality of differently directed, modulated light beams having different colors. In some examples, the color electronic display is a three-dimensional (3-D) color electronic display (e.g., a glasses-free, 3-D color electronic display). Different ones of the modulated, differently directed light beams may correspond to different 'views' associated with the 3-D color electronic display, according to various examples. The different 'views' may provide a 'glasses free' (e.g., autostereoscopic) representation of information being displayed by the 3-D color electronic display, for example.

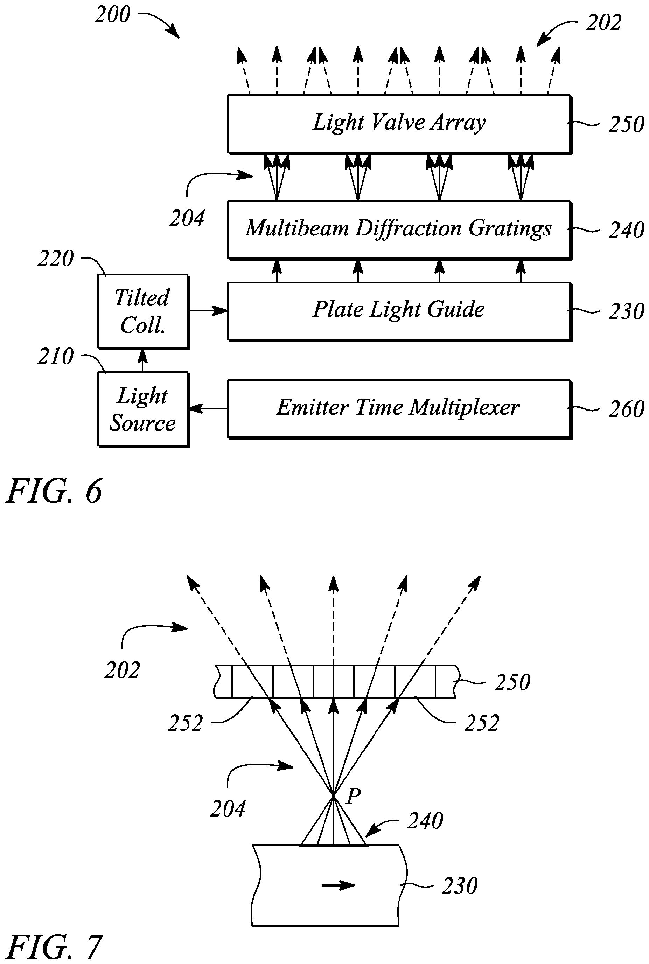

Figure 6 illustrates a block diagram of a color electronic display 200, according to an example consistent with the principles described herein. In particular, the electronic display 200 illustrated in Figure 6 is a 3-D color electronic display 200 (e.g., a 'glasses free' 3-D color electronic display) configured to emit modulated light beams 202. According to various examples, the modulated light beams 202 include light beams 202 having a plurality of different colors.

As illustrated in Figure 6, the 3-D color electronic display 200 includes a light source 210. The light source 210 includes a plurality of optical emitters of different colors laterally displaced from one another. In some examples, the light source 210 is substantially similar to the plurality of light sources 110 described above with respect to the multibeam diffraction grating-based color backlight 100. In particular, an optical emitter of the light source 210 is configured to emit or produce light having a color or equivalently a wavelength that differs from a color or wavelength of another optical emitter of the light source 210. Further, the optical emitter of the light source 210 is laterally displaced from the other optical emitters of the light source 210. For example, the light source 210 may include a first optical emitter to emit red light (i.e., a red optical emitter), a second optical emitter to emit green light (i.e., a green optical emitter), and a third optical emitter to emit blue light (i.e., a blue optical emitter). The first optical emitter may be laterally displaced from the second optical emitter and, in turn, the second optical emitter may be laterally displaced from the third optical emitter, for example.

The 3-D electronic display 200 further includes a tilted collimator 220. The tilted collimator 220 is configured to collimate light produced by the light source 210. The tilted collimator 220 is further configured to direct the collimated light into a plate light guide 230 at a non-zero tilt angle as guided light. In some examples, the tilted collimator 220 is substantially similar to the tilted collimator 140 of the multibeam diffraction grating-based color backlight 100, described above. In particular, in some examples, the tilted collimator 220 may include a collimating reflector that is substantially similar to the collimating reflector 140 of the multibeam diffraction grating-based color backlight 100. In some examples, the collimating reflector may have a shaped parabolic reflector surface (e.g., the collimating reflector may be a shaped reflector).

As illustrated in Figure 6, the 3-D color electronic display 200 further includes the plate light guide 230 to guide the tilted collimated light produced at an output of the tilted collimator 220. The guided light in the plate light guide 230 is a source of the light that ultimately becomes the modulated light beams 202 emitted by the 3-D color electronic display 200. According to some examples, the plate light guide 230 may be substantially similar to the plate light guide 120 described above with respect to multibeam diffraction grating-based color backlight 100. For example, the plate light guide 230 may be a slab optical waveguide that is a planar sheet of dielectric material configured to guide light by total internal reflection. According to various examples, the optical emitters of the light source 210 are laterally displaced from one another in a direction corresponding to a propagation axis of the guided light within the plate light guide 230. For example, the optical emitters may be laterally displaced in the propagation axis (e.g., x-axis) direction in a vicinity of a focus or focal point of the collimating reflector.

The 3-D color electronic display 200 illustrated in Figure 6 further includes an array of multibeam diffraction gratings 240 at a surface of the plate light guide. In some examples, the multibeam diffraction gratings 240 of the array may be substantially similar to the multibeam diffraction grating 130 of the multibeam diffraction grating-based color backlight 100, described above. In particular, the multibeam diffraction gratings 240 are configured to couple out a portion of the guided light from the plate light guide 230 as a plurality of light beams 204 representing different colors (e.g., different colors of a set of colors or color palette). Further, the multibeam diffraction grating 240 is configured to direct the light beams 204 of different colors in a plurality of different principal angular directions. In some examples, the plurality of light beams 204 of different colors having a plurality of different principal angular directions is a plurality of sets of light beams 204, wherein a set includes light beams of multiple colors that have the same principal angular direction. Further, the principal angular direction of light beams 204 in a set is different from the principal angular directions of light beams 204 in other sets in the plurality, according to some examples.

According to various examples, a principal angular direction of a modulated light beam 202 corresponding to light produced an optical emitter of the light source 210 may be substantially similar to a principal angular direction of another modulated light beam 202 corresponding to light produced by another optical emitter of the light source 210. For example, a principal angular direction of a red light beam 202 correspond to a first or red optical emitter may be substantially similar to a principal angular direction of one or both of a green light beam 202 and a blue light beam 202 of a second or green optical emitter and a third or blue optical emitter, respectively. The substantial similarity of the principal angular directions may be provided by the lateral displacements of the first (red) optical emitter, the second (green) optical emitter and the third (blue) optical emitter relative to one another in the light source 210, for example. Further, the substantial similarity may provide a pixel of the 3-D color electronic display 200 or equivalently a set of light beams 202 with a common principle angular direction having each of the light source colors, according to various examples.

In some examples, the multibeam diffraction grating 240 includes a chirped diffraction grating. In some examples, diffractive features (e.g., grooves, ridges, etc.) of the multibeam diffraction grating 240 are curved diffractive features. In yet other examples, the multibeam diffraction grating 240 includes a chirped diffraction grating having curved diffractive features. For example, the curved diffractive features may include a ridge or a groove that is curved (i.e., continuously curved or piece-wise curved) and a spacing between the curved diffractive features that may vary as a function of distance across the multibeam diffraction grating 240.

As illustrated in Figure 6, the 3-D color electronic display 200 further includes a light valve array 250. The light valve array 250 includes a plurality of light valves configured to modulate the differently directed light beams 204 of the plurality, according to various examples. In particular, the light valves of the light valve array 250 are configured to modulate the differently directed light beams 204 to provide the modulated light beams 202 that are the pixels of the 3-D color electronic display 200. Moreover, different ones of the modulated, differently directed light beams 202 may correspond to different views of the 3-D electronic display. In various examples, different types of light valves in the light valve array 250 may be employed including, but not limited to, liquid crystal light valves or electrophoretic light valves. Dashed lines are used in Figure 6 to emphasize modulation of the light beams 202. According to various examples, a color of a modulated light beam 202 is due in part or in whole to a color of the differently directed light beams 204 produced by the multibeam diffraction grating 240. For example, a light valve of the light valve array 250 may not include a color filter to produce modulated light beams 202 having different colors.

According to various examples, the light valve array 250 employed in the 3-D color electronic display 200 may be relatively thick or equivalently may be spaced apart from the multibeam diffraction grating 240 by a relatively large distance. A relatively thick light valve array 250 or a light valve array 250 that is spaced apart from the multibeam diffraction grating 240 may be employed since the multibeam diffraction grating 240 provides light beams 204 directed in a plurality of different principal angular directions, according to various examples of the principles described herein. In some examples, the light valve array 250 (e.g., using the liquid crystal light valves) may be spaced apart from the multibeam diffraction grating 240 or equivalently may have a thickness that is greater than about 50 micrometers. In some examples, the light valve array 250 may be spaced apart from the multibeam diffraction grating 240 or include a thickness that is greater than about 100 micrometers. In yet other examples, the thickness or spacing may be greater than about 200 micrometers. In some examples, the relatively thick light valve array 250 may be commercially available (e.g., a commercially available liquid crystal light valve array).

In some examples, the plurality of differently directed light beams 204 produced by the multibeam diffraction grating 240 is configured to converge or substantially converge (e.g., cross one another) at or in a vicinity of a point above the plate light guide 230. By 'substantially converge' it is meant that the differently directed light beams 204 are converging below or before reaching the 'point' or vicinity thereof and diverging above or beyond the point or point vicinity. Convergence of the differently directed light beams 204 may facilitate using the relatively thick light valve array 250, for example.

Figure 7 illustrates a cross sectional view of a plurality of differently directed light beams 204 that converge at a convergence point *P*, according to an example consistent with the principles described herein. As illustrated in Figure 7, the convergence point *P* is located between the multibeam diffraction grating 240 on the surface of the plate light guide 230 and the light valve array 250. In particular, the light valve array 250 is located at a distance from the plate light guide surface that is beyond the convergence point *P* of the differently directed light beams 204. Further, as illustrated, each of the differently directed light beams 204 passes through a different cell or light valve 252 of the light valve array 250. The differently directed light beams 204 may be modulated by the light valves 252 of the light valve array 250 to produce the modulated light beams 202, according to various examples. Dashed lines are used in Figure 7 to emphasize that modulation of the modulated light beams 202. A horizontal heavy arrow in the plate light guide 230 in Figure 7 represents guided light of different colors within the plate light guide 230 that is coupled out by the multibeam diffraction grating 240 as the differently directed light beams 204 having different colors corresponding to the guided light from the optical emitters of different colors in the light source 210.

Referring again to Figure 6, the 3-D color electronic display 200 may further include an emitter time multiplexer 260 to time multiplex the optical emitters of the light source 210, according to some examples. In particular, the emitter time multiplexer 260 is configured to sequentially activate each of the optical emitters of the light source 210 during a time interval. Sequential activation of the optical emitters is to sequentially produce light of a color corresponding to a respective activated optical emitter during a corresponding time interval of a plurality of different time intervals. For example, the emitter time multiplexer 260 may be configured to activate a first optical emitter (e.g., a red emitter) to produce light from the first optical emitter (e.g., red light) during a first time interval. The emitter time multiplexer 250 may be configured to activate a second optical emitter (e.g., a green emitter) to produce light from the second optical emitter (e.g., green light) during a second time interval after the first time interval, and so on. Time multiplexing the optical emitters of different colors may allow a person that is viewing the 3-D color electronic display 200 to perceive a combination of the different colors, according to various examples. In particular, when time multiplexed by the emitter time multiplexer 260, the optical emitters may produce a combination of different colors of light that ultimately result in a light beam 202 having a principal angular direction and a color (e.g., a perceived color) that represents a combination of the time-multiplexed different colors, for example. The emitter time multiplexer 260 may be implemented as a state machine (e.g., using a computer program, stored in memory and executed by a computer), according to various examples.

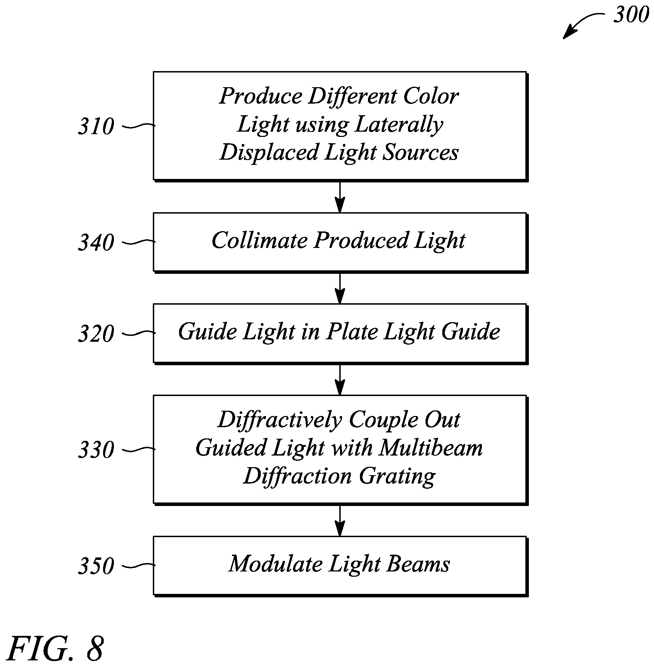

According to some examples of the principles described herein, a method of color electronic display operation is provided. Figure 8 illustrates a flow chart of a method 300 of color electronic display operation, according to an example consistent with the principles described herein. As illustrated in Figure 8, the method 300 of color electronic display operation includes producing 310 light using a plurality of light sources laterally displaced from one another. In some examples, the plurality of light sources used in producing 310 light is substantially similar to the plurality of light sources 110 described above with respect to the multibeam diffraction grating-based color backlight 100 that are laterally displaced. In particular, a light source of the light source plurality produces 310 light of a color different from colors produced by other light sources of the light source plurality.

The method 300 of color electronic display operation illustrated in Figure 8 further includes guiding 320 light in a plate light guide. In some examples, the plate light guide and the guided light may be substantially similar to the plate light guide 120 and the guided light 104, described above with respect to the multibeam diffraction grating-based color backlight 100. In particular, in some examples, the plate light guide may guide 320 the guided light according to total internal reflection. Further, the plate light guide may be a substantially planar dielectric optical waveguide (e.g., a planar dielectric sheet), in some examples. Further, the lateral displacement of the light sources is in a direction corresponding to a propagation axis in the plate light guide (e.g., the x-axis as illustrated in Figures 2A and 2C).

As illustrated in Figure 8, the method 300 of color electronic display operation further includes diffractively coupling out 330 a portion of the guided light using a multibeam diffraction grating. According to the invention, the multibeam diffraction grating is located at a surface of the plate light guide. For example, the multibeam diffraction grating may be formed in the surface of the plate light guide as grooves, ridges, etc. In other examples, the multibeam diffraction grating may include a film on the plate light guide surface. In some examples, the multibeam diffraction grating is substantially similar to the multibeam diffraction grating 130 described above with respect to the multibeam diffraction grating-based color backlight 100. In particular, the portion of guided light that is diffractively coupling out 330 of the plate light guide by the multibeam diffraction grating produces a plurality of light beams. The light beams of the plurality of light beams are redirected away from the plate light guide surface. In particular, a light beam of the light beam plurality that is redirected away from the surface has a different principal angular direction from other light beams of the plurality. In some examples, each redirected light beam of the plurality has a different principal angular direction relative to the other light beams of the plurality. Moreover, the plurality of light beams produced through diffractive coupling out 330 by the multibeam diffraction grating has light beams of different colors from one another, according to various examples.

According to the invention (e.g., as illustrated in Figure 8), the method 300 of color electronic display operation further includes collimating 340 the produced 310 light from the plurality of light sources and directing the collimated light into the plate light guide using a tilted collimator. In some examples, the tilted collimator is substantially similar to the tilted collimator 140 described above with respect to the multibeam diffraction grating-based color backlight 100. In particular, in some examples, collimating 340 the produced light may include using a collimating reflector to direct the collimated light at a tilt angle *θ* relative to the plate light guide surface as well as the propagation axis of the plate light guide. In some examples, the light from a respective light source of the light source plurality has a corresponding tilt angle *θ* determined by both a tilt of the collimating reflector and a lateral displacement of the respective light source relative to a focus or focal point of the collimating reflector.

According to some examples, the method 300 of color electronic display operation further includes modulating 350 the plurality of light beams using a corresponding plurality of light valves, as illustrated in Figure 8. Light beams of the plurality of light beams may be modulated 350 by passing through or otherwise interacting with the corresponding plurality of light valves, for example. The modulated 350 light beams may form pixels of a three-dimensional (3-D) color electronic display. For example, the modulated 350 light beams may provide a plurality of views of the 3-D color electronic display (e.g., a glasses-free, 3-D color electronic display). In some examples, the 3-D color electronic display may be substantially similar to the 3-D color electronic display 200, described above.

According to various examples, the light valves employed in modulating 350 may be substantially similar to the light valves of the light valve array 250 of the 3-D color electronic display 200, described above. For example, the light valves may include liquid crystal light valves. In another example, the light valves may be another type of light valve including, but not limited to, an electrowetting light valve or an electrophoretic light valve.

According to some examples (not illustrated in Figure 8), the method 300 of color electronic display operation further includes time multiplexing the light sources of the light source plurality. In particular, time multiplexing includes sequentially activating the light sources to produce light corresponding to the color of the respective activated light source during a corresponding time interval of a plurality of different time intervals. Time multiplexing may be provided by a light source time multiplexer substantially similar to the emitter time multiplexer 260 described above with respect to the 3-D color electronic display 200, for example.

Thus, there have been described examples of a multibeam diffraction grating-based color backlight, a 3-D color electronic display and a method of color electronic display operation that employ a multibeam diffraction grating and a plurality of laterally displaced light sources to provide a plurality of differently directed, different color light beams. It should be understood that the above-described examples are merely illustrative of some of the many specific examples that represent the principles described herein. Clearly, those skilled in the art can readily devise numerous other arrangements without departing from the scope as defined by the following claims.

## Claims

1. A multibeam diffraction grating-based color backlight comprising:
a plurality of light sources (110) of different colors;
a plate light guide (120) to guide light of the different colors produced by the light sources, the light sources being laterally displaced from one another in a direction corresponding to a propagation axis of the guided light within the plate light guide;
a tilted collimator (140) between the plurality of light sources and the plate light guide, the tilted collimator configured to collimate and tilt light from the light sources and to direct the tilted and collimated light into the plate light guide as the guided light; and
a multibeam diffraction grating (130) at a surface of the plate light guide to diffractively couple out a portion of the guided light from the plate light guide as a plurality of light beams having the different colors, a light beam of the light beam plurality having a principal angular direction different from principal angular directions of other light beams of the light beam plurality, wherein the principal angular direction is a function of the color and angle of incidence of the guided light, and
wherein the lateral displacement of each light source determines a relative angle of propagation of the corresponding color within the plate light guide such that a principal angular direction of a coupled-out light beam of a color corresponding to a respective light source is a function of the lateral displacement of the respective light source.

2. The multibeam diffraction grating-based color backlight of Claim 1, wherein the multibeam diffraction grating comprises a chirped diffraction grating.

3. The multibeam diffraction grating-based color backlight of Claim 1, wherein the multibeam diffraction grating comprises one of curved grooves and curved ridges that are spaced apart from one another.

4. The multibeam diffraction grating-based color backlight of Claim 1, wherein the tilted collimator comprises a collimating reflector to reflect the collimated light at a tilt angle relative to a top surface and a bottom surface of the plate light guide, the tilt angle being both greater than zero and less than a critical angle of total internal reflection within the plate light guide, and wherein light from a respective light source of the light source plurality has a corresponding tilt angle determined by both a tilt of the collimating reflector and a lateral displacement of the respective light source relative to a focus of the collimating reflector.

5. The multibeam diffraction grating-based color backlight of Claim 4, wherein the collimating reflector is integral to and formed from a material of the plate light guide, the collimating reflector comprising a portion of a doubly curved paraboloid reflector having a first parabolic shape to collimate light in a first direction parallel to a surface of the plate light guide and a second parabolic shape to collimate light in a second direction orthogonal to the first direction.

6. The multibeam diffraction grating-based color backlight of Claim 4, wherein the collimating reflector is a shaped reflector, the shaped reflector in conjunction with the laterally displaced light sources configured to produce a first coupled-out light beam corresponding to a first color of the different colors of light and to produce a second coupled-out light beam corresponding to a second color of the different colors, a principal angular direction of the first coupled-out light beam being about equal to a principal angular direction of the second coupled-out light beam.

7. A three-dimensional, 3-D, color electronic display comprising the multibeam diffraction grating-based color backlight of Claim 1, the 3-D color electronic display further comprising a light valve (252) configured to modulate a light beam of the light beam plurality, the light valve being adjacent to the multibeam diffraction grating, wherein the light beam to be modulated by the light valve corresponds to a pixel of the 3-D color electronic display.

8. The 3-D color electronic display of claim 7, wherein:
the multibeam diffraction grating is one of an array of multibeam diffraction gratings (240) at a surface of the plate light guide, and the light valve is one of a light valve array (250).

9. The 3-D color electronic display of Claim 8, wherein the plurality of light sources comprises a first light source (110') configured to emit red light, a second light source (110") configured to emit green light, and a third light source (110"') configured to emit blue light, and wherein a principal angular direction of a red light beam of the plurality of light beams is substantially similar to a principal angular direction of one or both of a green light beam and a blue light beam of the plurality of light beams as determined by the lateral displacements of the first light source, the second light source and the third light source relative to one another.

10. The 3-D color electronic display of Claim 8, wherein the multibeam diffraction grating comprises a chirped diffraction grating having curved diffractive features.

11. The 3-D color electronic display of Claim 8, wherein the plurality of light beams produced by the multibeam diffraction grating substantially converges at a point (P) above the plate light guide surface, and wherein the light valve array is located at a distance from the plate light guide surface that is beyond the convergence point of the light beams.

12. The 3-D color electronic display of Claim 8, further comprising an emitter time multiplexer (260) to time multiplex optical emitters of the light sources, wherein the time multiplexer is configured to sequentially activate each of the optical emitters of the light sources to produce light of a different color corresponding to the respective activated optical emitter during a corresponding time interval of a plurality of different time intervals.

13. A method of color electronic display operation, the method comprising:
producing light using a plurality of light sources laterally displaced from one another, a light source of the light source plurality producing light of a color different from colors produced by other light sources of the light source plurality (310);
using a tilted collimator between the plurality of light sources and a plate light guide to collimate and tilt light from the light sources and to direct the tilted and collimated light into the plate light guide as guided light (340), wherein the lateral displacement of the each light source determines a relative angle of propagation of the corresponding color within the plate light guide;
guiding the produced light in the plate light guide (320); and
diffractively coupling out a portion of the guided light using a multibeam diffraction grating at a surface of the plate light guide to produce a plurality of light beams having different colors directed away from the plate light guide in a plurality of different principal angular directions (330), wherein a principal angular direction is a function of the color and angle of incidence of the guided light, such that the principle angular direction is a function of the lateral displacement of the respective light source,
wherein the light sources are laterally displaced in a direction corresponding to a propagation axis of the plate light guide.

## Patentansprüche

1. Farbige Rückbeleuchtung auf Basis eines Mehrstrahldiffraktionsgitters, umfassend:
eine Vielzahl von Lichtquellen (110) mit unterschiedlichen Farben;
einen Plattenlichtleiter (120) zum Leiten von Licht mit den unterschiedlichen Farben, das durch die Lichtquellen produziert wurde, wobei die Lichtquellen in einer Richtung, die einer Ausbreitungsachse des geleiteten Lichts innerhalb des Plattenlichtleiters entspricht, seitlich verschoben sind;
einen gekippten Kollimator (140) zwischen der Vielzahl der Lichtquellen und dem Plattenlichtleiter, wobei der gekippte Kollimator ausgestaltet ist, um Licht aus den Lichtquellen zu kollimieren und zu kippen und das gekippte und kollimierte Licht als das geleitete Licht in den Plattenlichtleiter zu lenken; und
ein Mehrstrahldiffraktionsgitter (130) an einer Oberfläche des Plattenlichtleiters, um einen Anteil des geleiteten Lichts aus dem Plattenlichtleiter als Vielzahl von Lichtstrahlen mit den unterschiedlichen Farben diffraktiv auszukoppeln, wobei ein Lichtstrahl der Lichtstrahlvielzahl eine Hauptwinkelrichtung aufweist, die sich von Hauptwinkelrichtungen anderer Lichtstrahle der Lichtstrahlvielzahl unterscheidet, wobei die Hauptwinkelrichtung eine Funktion der Farbe und des Einfallswinkels des geleiteten Lichts ist, und
wobei die seitliche Verschiebung jeder Lichtquelle einen relativen Ausbreitungswinkel der entsprechenden Farbe innerhalb des Plattenlichtleiters bestimmt, so dass eine Hauptwinkelrichtung eines ausgekoppelten Lichtstrahls einer Farbe, die einer jeweiligen Lichtquelle entspricht, eine Funktion der seitlichen Verschiebung der jeweiligen Lichtquelle ist.

2. Farbige Rückbeleuchtung auf Basis eines Mehrstrahldiffraktionsgitters nach Anspruch 1, wobei das Mehrstrahldiffraktionsgitter ein Chirp-Diffraktionsgitter umfasst.

3. Farbige Rückbeleuchtung auf Basis eines Mehrstrahldiffraktionsgitters nach Anspruch 1, wobei das Mehrstrahldiffraktionsgitter eines von gekrümmten Rillen und gekrümmten Rippen umfasst, die voneinander beabstandet sind.

4. Farbige Rückbeleuchtung auf Basis eines Mehrstrahldiffraktionsgitters nach Anspruch 1, wobei der gekippte Kollimator einen kollimierenden Reflektor umfasst, um das kollimierte Licht in einem Kippwinkel relativ zu einer oberen Oberfläche und einer unteren Oberfläche des Plattenlichtleiters zu reflektieren, wobei der Kippwinkel sowohl größer als Null als auch kleiner als ein kritischer Winkel der inneren Totalreflexion innerhalb des Plattenlichtleiters ist, und wobei Licht aus einer jeweiligen Lichtquelle der Lichtquellenvielzahl einen entsprechenden Kippwinkel aufweist, der sowohl durch eine Kippung des kollimierenden Reflektors als auch eine seitliche Verschiebung der jeweiligen Lichtquelle relativ zu einem Fokus des kollimierenden Reflektors bestimmt wird.

5. Farbige Rückbeleuchtung auf Basis eines Mehrstrahldiffraktionsgitters nach Anspruch 4, wobei der kollimierende Reflektor integral mit einem Material des Plattenlichtleiters und aus diesem gebildet ist, wobei der kollimierende Reflektor einen Anteil eines doppelt gekrümmten Paraboloidreflektors mit einer ersten Parabolform, um Licht in einer ersten Richtung parallel zu einer Oberfläche des Plattenlichtleiters zu kollimieren, und eine zweite Parabolform umfasst, um Licht in einer zweiten Richtung orthogonal zu der ersten Richtung zu kollimieren.

6. Farbige Rückbeleuchtung auf Basis eines Mehrstrahldiffraktionsgitters nach Anspruch 4, wobei der kollimierende Reflektor ein geformter Reflektor ist, wobei der geformte Reflektor zusammen mit den seitlich verschobenen Lichtquellen ausgestaltet ist, um einen ersten ausgekoppelten Lichtstrahl entsprechend einer ersten Farbe der verschiedenen Lichtfarben zu produzieren, und um einen zweiten ausgekoppelten Lichtstrahl entsprechend einer zweiten Farbe der verschiedenen Farben zu produzieren, wobei eine Hauptwinkelrichtung des ersten ausgekoppelten Lichtstrahls etwa gleich einer Hauptwinkelrichtung des zweiten ausgekoppelten Lichtstrahls ist.

7. Dreidimensionales, 3D, elektronisches Farbdisplay, umfassend die farbige Rückbeleuchtung auf Basis eines Mehrstrahldiffraktionsgitters gemäß Anspruch 1, wobei das elektronische 3D-Farbdisplay des Weiteren ein Lichtventil (252) umfasst, das ausgestaltet ist, um einen Lichtstrahl der Lichtstrahlvielzahl zu modulieren, wobei das Lichtventil sich benachbart zu dem Mehrstrahldiffraktionsgitter befindet, wobei der durch das Lichtventil zu modulierende Lichtstrahl einem Pixel des elektronischen 3D-Farbdisplays entspricht.

8. Elektronisches 3D-Farbdisplay nach Anspruch 7, wobei:
das Mehrstrahldiffraktionsgitter eines von einer Gruppierung von Mehrstrahldiffraktionsgittern (240) an einer Oberfläche des Plattenlichtleiters ist und das Lichtventil eines von einer Lichtventilgruppierung (250) ist.

9. Elektronisches 3D-Farbdisplay nach Anspruch 8, wobei die Vielzahl der Lichtquellen eine erste Lichtquelle (110'), die ausgestaltet ist, um rotes Licht zu emittieren, eine zweite Lichtquelle (110"), die ausgestaltet ist, um grünes Licht zu emittieren, und eine dritte Lichtquelle (110'") umfasst, die ausgestaltet ist, um blaues Licht zu emittieren, und
wobei eine Hauptwinkelrichtung eines roten Lichtstrahls der Vielzahl der Lichtstrahle einer Hauptwinkelrichtung von einem oder beiden von einem grünen Lichtstrahl und einem blauen Lichtstrahl der Vielzahl von Lichtstrahle im Wesentlichen ähnlich ist, bestimmt durch die seitlichen Verschiebungen der ersten Lichtquelle, der zweiten Lichtquelle und der dritten Lichtquelle relativ zueinander.

10. Elektronisches 3D-Farbdisplay nach Anspruch 8, wobei das Mehrstrahldiffraktionsgitter ein Chirp-Diffraktionsgitter mit gekrümmten diffraktiven Merkmalen umfasst.

11. Elektronisches 3D-Farbdisplay nach Anspruch 8, wobei die Vielzahl der durch das Mehrstrahldiffraktionsgitter produzierten Lichtstrahle im Wesentlichen an einem Punkt (P) oberhalb der Plattenlichtleiteroberfläche konvergiert, und wobei sich die Lichtventilgruppierung in einem Abstand von der Plattenlichtleiteroberfläche jenseits des Konvergenzpunkts der Lichtstrahle befindet.

12. Elektronisches 3D-Farbdisplay nach Anspruch 8, des Weiteren umfassend einen Emitter-Zeitmultiplexer (260) zum Zeitmultiplexen von optischen Emittern der Lichtquellen, wobei der Zeitmultiplexer ausgestaltet ist, um sequentiell jeden der optischen Emitter der Lichtquellen zu aktivieren, um Licht mit einer anderen Farbe, die dem jeweiligen aktivierten optischen Emitter entspricht, während eines entsprechenden Zeitintervalls einer Vielzahl von unterschiedlichen Zeitintervallen zu produzieren.

13. Verfahren zum Betrieb eines elektronischen Farbdisplays, wobei das Verfahren umfasst:
Produzieren von Licht unter Verwendung einer Vielzahl von Lichtquellen, die seitlich zueinander verschoben sind, wobei eine Lichtquelle der Lichtquellenvielzahl Licht mit einer Farbe produziert, die sich von Farben unterscheidet, die durch andere Lichtquellen der Lichtquellenvielzahl (310) produziert werden;
Verwenden eines gekippten Kollimators zwischen der Vielzahl von Lichtquellen und einem Plattenlichtleiter, um Licht aus den Lichtquellen zu kollimieren und zu kippen und um das gekippte und kollimierte Licht als geleitetes Licht (340) in den Plattenlichtleiter zu lenken, wobei die seitliche Verschiebung von jeder Lichtquelle einen relativen Ausbreitungswinkel der entsprechenden Farbe innerhalb des Plattenlichtleiters bestimmt;
Leiten des produzierten Lichts in den Plattenlichtleiter (320); und
diffraktives Auskoppeln eines Anteils des geleiteten Lichts unter Verwendung eines Mehrstrahldiffraktionsgitters an einer Oberfläche des Plattenlichtleiters, um eine Vielzahl von Lichtstrahlen mit unterschiedlichen Farben zu produzieren, die in einer Vielzahl von unterschiedlichen Hauptwinkelrichtungen (330) von dem Plattenlichtleiter weggeführt werden, wobei eine Hauptwinkelrichtung eine Funktion der Farbe und des Einfallwinkels des geleiteten Lichts ist, so dass die Hauptwinkelrichtung eine Funktion der seitlichen Verschiebung der jeweiligen Lichtquelle ist,
wobei die Lichtquellen in einer Richtung, die der Ausbreitungsachse des Plattenlichtleiters entspricht, seitlich verschoben sind.

## Revendications

1. Rétro-éclairage coloré à base de réseau de diffraction multifaisceau comprenant :
une pluralité de sources de lumière (110) de couleurs différentes ;
un guide de lumière en plaque (120) pour guider la lumière des différentes couleurs produites par les sources de lumière, les sources de lumière étant latéralement déplacées les unes par rapport aux autres dans une direction correspondant à un axe de propagation de la lumière guidée dans le guide de lumière en plaque ;
un collimateur incliné (140) entre la pluralité de sources de lumière et le guide de lumière en plaque, le collimateur incliné étant configuré pour collimater et incliner la lumière provenant des sources de lumière et pour diriger la lumière inclinée et collimatée dans le guide de lumière en plaque en tant que lumière guidée ; et
un réseau de diffraction multifaisceau (130) sur une surface du guide de lumière en plaque pour coupler par diffraction une partie de la lumière guidée du guide de lumière en plaque sous la forme d'une pluralité de faisceaux de lumière ayant les différentes couleurs, un faisceau de lumière de la pluralité de faisceaux de lumière ayant une direction angulaire principale différente des directions angulaires principales des autres faisceaux de lumière de la pluralité de faisceaux de lumière, la direction angulaire principale étant fonction de la couleur et de l'angle d'incidence de la lumière guidée, et
le déplacement latéral de chaque source de lumière déterminant un angle de propagation relatif de la couleur correspondante dans le guide de lumière en plaque de telle sorte qu'une direction angulaire principale d'un faisceau de lumière couplé d'une couleur correspondant à une source de lumière respective est fonction du déplacement latéral de la source de lumière respective.

2. Rétro-éclairage coloré à base de réseau de diffraction multifaisceau selon la revendication 1, le réseau de diffraction multifaisceau comprenant un réseau de diffraction chirpé.

3. Rétro-éclairage coloré à base de réseau de diffraction multifaisceau selon la revendication 1, le réseau de diffraction multifaisceau comprenant des rainures courbes ou des arêtes courbes qui sont espacées les unes des autres.

4. Rétro-éclairage coloré à base de réseau de diffraction multifaisceau selon la revendication 1, le collimateur incliné comprenant un réflecteur collimateur pour réfléchir la lumière collimatée selon un angle d'inclinaison par rapport à une surface supérieure et une surface inférieure du guide de lumière en plaque, l'angle d'inclinaison étant à la fois supérieur à zéro et inférieur à un angle critique de réflexion interne totale dans le guide de lumière en plaque, et la lumière provenant d'une source de lumière respective de la pluralité de sources de lumière ayant un angle d'inclinaison correspondant déterminé à la fois par une inclinaison du réflecteur collimateur et un déplacement latéral de la source de lumière respective par rapport à un foyer du réflecteur collimateur.

5. Rétro-éclairage coloré à base de réseau de diffraction multifaisceau selon la revendication 4, le réflecteur collimateur étant solidaire d'un matériau du guide de lumière en plaque et formé à partir de celui-ci, le réflecteur collimateur comprenant une partie d'un réflecteur parabolique doublement incurvé ayant une première forme parabolique pour collimater la lumière dans une première direction parallèle à une surface du guide de lumière en plaque et une deuxième forme parabolique pour collimater la lumière dans une deuxième direction orthogonale à la première direction.

6. Rétro-éclairage coloré à base de réseau de diffraction multifaisceau selon la revendication 4, le réflecteur de collimation étant un réflecteur façonné, le réflecteur façonné, conjointement avec les sources de lumière déplacées latéralement, étant configuré pour produire un premier faisceau de lumière couplée correspondant à une première couleur des différentes couleurs de lumière et pour produire un deuxième faisceau de lumière couplée correspondant à une deuxième couleur des différentes couleurs, une direction angulaire principale du premier faisceau de lumière couplée étant environ égale à une direction angulaire principale du deuxième faisceau de lumière couplée.

7. Affichage électronique couleur tridimensionnel, 3D, comprenant le rétro-éclairage couleur à base de réseau de diffraction multifaisceau selon la revendication 1, l'affichage électronique couleur 3D comprenant en outre une valve de lumière (252) configurée pour moduler un faisceau lumineux de la pluralité de faisceaux lumineux, la valve de lumière étant adjacente au réseau de diffraction multifaisceau, le faisceau lumineux à moduler par la valve de lumière correspondant à un pixel de l'affichage électronique couleur 3D.

8. Affichage électronique couleur 3D selon la revendication 7,
le réseau de diffraction multifaisceau étant l'un d'un réseau de réseaux de diffraction multifaisceau (240) sur une surface du guide de lumière en plaque, et la valve de lumière étant l'une d'un réseau de valves de lumière (250).

9. Affichage électronique couleur 3D selon la revendication 8, la pluralité de sources de lumière comprenant une première source de lumière (110') configurée pour émettre une lumière rouge, une deuxième source de lumière (110") configurée pour émettre une lumière verte, et une troisième source de lumière (110"') configurée pour émettre une lumière bleue, et
une direction angulaire principale d'un faisceau de lumière rouge de la pluralité de faisceaux de lumière étant sensiblement similaire à une direction angulaire principale d'un faisceau de lumière verte et/ou d'un faisceau de lumière bleue de la pluralité de faisceaux de lumière, telle que déterminée par les déplacements latéraux de la première source de lumière, de la deuxième source de lumière et de la troisième source de lumière les unes par rapport aux autres.

10. Affichage électronique couleur 3D selon la revendication 8, le réseau de diffraction multifaisceau comprenant un réseau de diffraction chirpé ayant des caractéristiques diffractives courbes.

11. Affichage électronique couleur 3D selon la revendication 8, la pluralité de faisceaux lumineux produits par le réseau de diffraction multifaisceau convergeant sensiblement en un point (P) au-dessus de la surface de guidage de la lumière en plaque, et le réseau de valves de lumière étant situé à une distance de la surface de guidage de la lumière en plaque qui est au-delà du point de convergence des faisceaux lumineux.

12. Affichage électronique couleur 3D selon la revendication 8, comprenant en outre un multiplexeur temporel d'émetteur (260) pour multiplexer dans le temps les émetteurs optiques des sources de lumière, le multiplexeur temporel étant configuré pour activer séquentiellement chacun des émetteurs optiques des sources de lumière pour produire de la lumière d'une couleur différente correspondant à l'émetteur optique activé respectif pendant un intervalle de temps correspondant d'une pluralité d'intervalles de temps différents.

13. Procédé de fonctionnement d'un affichage électronique couleur, le procédé comprenant :
la production de lumière en utilisant une pluralité de sources de lumière déplacées latéralement les unes par rapport aux autres, une source de lumière de la pluralité de sources de lumière produisant une lumière d'une couleur différente des couleurs produites par d'autres sources de lumière de la pluralité de sources de lumière (310) ;
l'utilisation d'un collimateur incliné entre la pluralité de sources de lumière et un guide de lumière en plaque pour collimater et incliner la lumière provenant des sources de lumière et pour diriger la lumière inclinée et collimatée dans le guide de lumière en plaque en tant que lumière guidée (340), le déplacement latéral de chaque source de lumière déterminant un angle de propagation relatif de la couleur correspondante dans le guide de lumière en plaque ;
le guidage de la lumière produite dans le guide de lumière en plaque (320) ; et
le couplage par diffraction d'une partie de la lumière guidée en utilisant un réseau de diffraction multifaisceau sur une surface du guide de lumière en plaque pour produire une pluralité de faisceaux lumineux ayant différentes couleurs dirigés à l'écart du guide de lumière en plaque dans une pluralité de directions angulaires principales différentes (330), une direction angulaire principale étant fonction de la couleur et de l'angle d'incidence de la lumière guidée, de telle sorte que la direction angulaire principale est fonction du déplacement latéral de la source de lumière respective,
les sources de lumière étant déplacées latéralement dans une direction correspondant à un axe de propagation du guide de lumière en plaque.
